# EUROPÄISCHE PATENTSCHRIFT

(11) **EP 1 966 470 B1**
(45) Veröffentlichungstag und Bekanntmachung des Hinweises auf die Patenterteilung: **16.09.2009**
(21) Anmeldenummer: 06807627.2
(22) Anmeldetag: 27.10.2006
(51) Int. Cl.: F01N 3/20

(54) **ABGASNACHBEHANDLUNGSVORRICHTUNG**
EXHAUST GAS AFTERTREATMENT DEVICE
DISPOSITIF DE TRAITEMENT DE GAZ D'ECHAPPEMENT

(30) Priorität: 21.12.2005 DE 102005061145
(43) Veröffentlichungstag der Anmeldung: 10.09.2008
(73) Patentinhaber: ROBERT BOSCH GMBH, 70442 Stuttgart (DE)
(72) Erfinder: HAEBERER, Rainer, 75015 Bretten (DE); BUERGLIN, Markus, 71254 Ditzingen (DE); HAGER, Bernhard, A-5412 Puch (AT); COCLICI, Cristian-Aurelian, 70195 Stuttgart (DE); SCHNEID Eckhard, 71636 Ludwigsburg (DE)
(86) Internationale Anmeldenummer: PCT/EP2006/067888
(87) Internationale Veröffentlichungsnummer: WO 2007/073957

(56) Entgegenhaltungen:
- DE-C1- 19 856 366
- DE-C1- 19 919 426
- JP-A- 9 096 212

## Beschreibung

### Stand der Technik

Die Erfindung geht aus von einer Abgasnachbehandlungsvorrichtung nach dem Oberbegriff des Anspruchs 1.

Zur Verminderung der in einem Abgas eines Verbrennungsmotors enthaltenen Stickoxide hat sich für solche Verbrennungsmotoren, die mit Luftüberschuss betrieben werden, ein Verfahren zur selektiven katalytischen Reduktion ("SCR") als vorteilhaft erwiesen. Bei diesem Verfahren werden Stickoxide zusammen mit Ammoniak in einem selektiven Katalysator zu Stickstoff und Wasser umgesetzt. Das zur katalytischen Umsetzung der Stickoxide notwendige Reduktionsmittel wird anstelle des Ammoniaks in Form einer wässrigen Harnstofflösung im Fahrzeug mitgeführt, aus der das Ammoniak durch Thermolyse und Hydrolyse der Harnstofflösung in der jeweils zur Umsetzung benötigten Menge freigesetzt werden kann. Die wässrige Harnstofflösung wird durch eine Dosiervorrichtung, insbesondere ein Dosierventil, über ein Abgasrohr in den Reduktionskatalysator eingebracht. Das Abgas kann eine sehr hohe Temperatur haben, die im Bereich um 700° C liegen kann. Dies stellt hohe Anforderungen an das Dosierventil und an das Reduktionsmittel hinsichtlich Haltbarkeit und Stabilität.

Aus der DE4436397 bzw. aus der DE10324482 es bekannt, das am heißen Abgasrohr angeordnete Dosierventil durch einen Kühlkreislauf aktiv zu kühlen, beispielsweise mittels Kühlwasser oder Reduktionsmittel. Dieser zusätzliche aktive Kühlkreislauf ist jedoch mit einem großen technischen und finanziellen Aufwand verbunden.

Aus der DE19919426 ist es bekannt, ein sogenanntes Wärmerohr zwischen dem Abgasrohr und dem Dosierventil anzuordnen.

### Vorteile der Erfindung

Bei der erfindungsgemäßen Abgasnachbehandlungsvorrichtung ist ein Abgasrohr derart ausgebildet, um einen direkten Hitzeeintrag in das Dosierventil zu vermindern und/oder eine erhöhte Wärmeabfuhr aus dem Dosierventil zu ermöglichen. Dabei ist von Vorteil, dass hitzeempfindliche Teile der Abgasnachbehandlungsvorrichtung, insbesondere ein Dosierventil oder eine Ventilspitze eines Dosierventils, vor einer Abgaswärmeströmung geschützt und somit passiv gekühlt bzw. dass die Wärme schnellstmöglich abgeleitet werden kann, sofern diese die hitzeempfindlichen Bauteile beaufschlagt. Es ist günstigerweise nicht mehr nötig, einen aktiven Kühlkreislauf bereitzustellen, wodurch die Abgasnachbehandlungsvorrichtung erheblich vereinfacht wird. Dabei weist das Abgasrohr einen Flansch auf, an dem das Dosierventil angeflanscht ist. Günstigerweise sitzt das Dosierventil somit nicht direkt auf dem Abgasrohr an, sondern ist etwas nach außen versetzt. Der Flansch steht vorzugsweise unter einem Winkel seitlich ab. Dadurch ist insbesondere die besonders hitzeempfindliche Ventilspitze des Dosierventils von der Abgasströmung beabstandet und nicht der direkten Abgasströmung ausgesetzt. Als weitere passive Kühlmaßnahme ist der Flansch selbst gekühlt, um eine möglichst geringe Wärmeübertragung auf das auf dem Flansch angeordnete Dosierventil zu erzielen. Dabei ist der Flansch in einem Kontaktbereich zu dem Dosierventil bzw. dem Haltekörper des Dosierventils als flächige Auflage ausgebildet. Die Auflage dient günstigerweise zur flächigen Ablage eines Elements aus wärmeableitendern Material, beispielsweise eines Wärmeableitblechs. Zur Halterung des Dosierventils ist ein Haltekörper vorgesehen, wobei auf wenigstens einer Anströmseite des Haltekörpers ein Element aus Material mit geringer Wärmeleitfähigkeit angeordnet ist. Dadurch kann vorteilhafterweise eine über den Haltekörper in den Kühlkörper gelangender Wärmeeintrag reduziert werden.

Besonders bevorzugt ist das Element als Scheibe mit sehr kleiner Auflagefläche ausgeführt, was einen reduzierten Wärmeübergang zur Folge hat. Der Haltekörper selbst kann aus Material mit geringer Wärmeleitfähigkeit, beispielsweise aus Keramik, gebildet sein.

Insbesondere kann das Wärmeableitblech auf der Höhe der Ventilbefestigung flächig auf der Auflage des Flansches angeordnet sein. Vorteilhafterweise hat das Wärmeableitblech eine große Oberfläche und gibt die Wärme an die Umgebung ab. Somit kann der Flansch an der Schnittstelle zum Ventil gekühlt werden, so dass ein flanschseitiger Wärmeeintrag in das Dosierventil von vorneherein reduziert wird.

In einer besonders günstigen Weiterbildung ist zwischen einer Einströmungsrichtung des Reduktionsmittels aus dem Dosierventil in das Abgasrohr und einer Abgasströmungsrichtung im Abgasrohr ein spitzer Winkel ausgebildet. Das Dosierventil mündet somit in einem spitzen Winkel, vorzugsweise in einem Winkel von 40° bis 45°, in dem Abgasrohr, und zwar in einer Abgasströmungsrichtung. Dabei ist von Vorteil, dass das Dosierventil, insbesondere die Ventilspitze, vor einer direkten Hitzebeaufschlagung geschützt wird, wodurch eine weitere passive Kühtmaßnahme bereitgestellt wird.

Günstigerweise kann der Flansch so ausgebildet sein, dass eine im ventilnahen Bereich des Abgasrohres auftretende Rezirkulationsströmung der Abgasströmung umlenkbar ist. Besonders bevorzugt kann hierfür der Flansch im ventilnahen Bereich eine spezielle Formgebung aufweisen, beispielsweise bauchig ausgebildet sein, wobei die Wölbung insbesondere nach außen gerichtet ist. Dadurch ist die Rezirkulationsströmung nicht mehr direkt in Richtung zur Ventilsitze gerichtet, sondern kann über die Formgebung des Flansches abgelenkt werden, so dass eine Hauptströmung der Rezirkulationsströmung gezwungenermaßen von der Ventilspitze abgehalten bzw. abgelenkt wird. Es kann auch ein Abschirmelement, beispielsweise in Form einer geometrischen Barriere, vorgesehen sein, um die heiße Rezirkulationsströmung von der Ventilspitze abzuhalten. Besonders bevorzugt ist das Abschirmelement kragenförmig rund um die Ventilspitze ausgebildet. Es sind aber auch andere geeignete geometrische Formen möglich.

Dringt dennoch Wärme, beispielsweise Restwärme der Rezirkulationsströmung, entgegen der Einströmungsrichtung des Reduktionsmittels über die Ventilspitze nach oben in das Dosierventil in Richtung Ventilstecker, können Mittel vorgesehen sein, die eine möglichst rasche Wärmeabfuhr aus dem Ventilkörper ermöglichen. Es kann sich dabei um passive Kühlmittel handeln, die dem Dosierventil Wärme entziehen und diese an einen Kühlkörper abgeben. Bevorzugt kann das Dosierventil zumindest bereichsweise von einem Material mit hoher Wärmeleitfähigkeit umhüllt sein. Besonders bevorzugt ist das Dosierventil am Ventilhals von einem Wärmeableitblech umhüllt, um eine effiziente und rasche Wärmeabfuhr aus dem Dosierventil zu ermöglichen. Es kann auch eine am Ventilhals eng anliegende Manschette aus Material mit hoher Wärmeleitfähigkeit, beispielsweise ein Metall wie Kupfer, Kupferlitze oder dgl., angeordnet sein. Denkbar ist auch die Verwendung von Graphit.

In einer günstigen Weiterbildung kann das Dosierventil wenigstens bereichsweise beabstandet vom Haltekörper angeordnet sein. Dadurch entsteht ein Luftspalt zwischen dem Haltekörper und einem wärmeableitenden Mantel, beispielsweise einem Stahltopf, der das Dosierventil umgibt, so dass vorteilhafterweise keine Wärmeeintrag vom Haltekörper in die Ventilspitze erfolgen kann. Die aus der Rezirkulationsströmung und dem Wärmeeintrag stammenden Wärmeströme vereinigen sich vorteilhafterhafterweise erst im Kühlkörper, wobei sie so abgeschwächt sind, dass das Dosierventil nicht mehr durch Wärmeeintrag beschädigt werden kann.

Insgesamt wird mit den erfindungsgemäßen passiven Kühlmassnahmen eine vorteilhafte Strategie zur Kühlung der Ventilspitze des Dosierventils bereitgestellt, wobei mit einfachen Mitteln eine kostengünstige und effiziente Lösung erzielt werden kann.

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von Zeichnungen dargestellten Ausführungsbeispielen der Erfindung. Im Folgenden zeigen schematisch im Schnitt:
- Fig. 1: eine bevorzugte Ausführungsform einer erfindungsgemäßen Abgasnachbehandlungsvorrichtung;
- Fig. 2: eine Detailansicht von wärmeabhaltenden Mitteln der erfindungsgemäßen Abgasnachbehandlungsvorrichtung in Form eines Flansches;
- Fig. 3: eine Detailansicht einer alternativen Ausführungsform der Erfindung;
- Fig. 4: eine Detailansicht von wärmeableitenden Mitteln an einem Dosierventilhals;
- Fig. 5: eine Detailansicht von alternativen wärmeableitenden Mitteln am Flansch; und
- Fig. 6: eine Detailansicht einer Anordnung von alternativen wärmeableitenden Mitteln der erfindungsgemäßen Abgasnachbehandlungsvorrichtung.

### Beschreibung der Ausführungsbeispiele

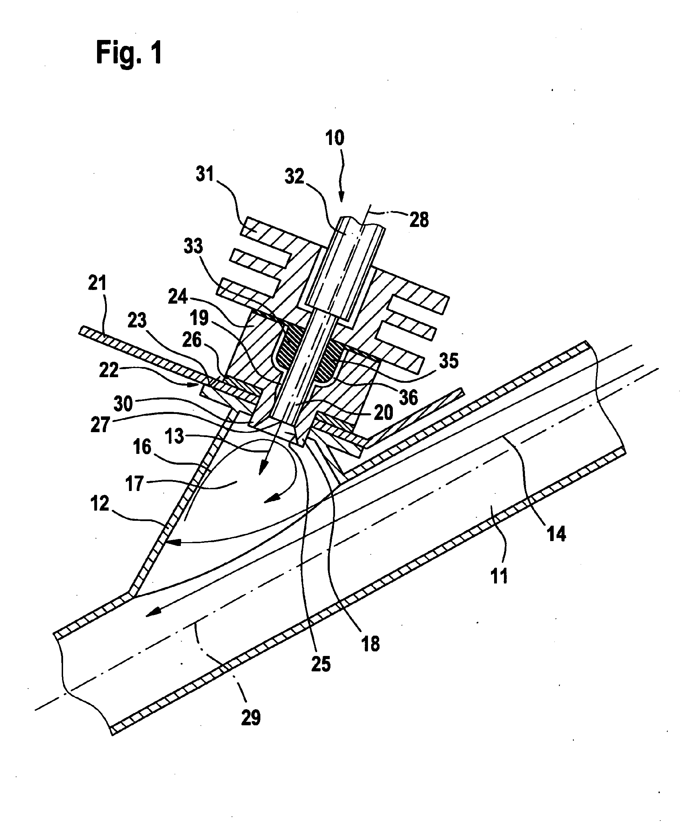

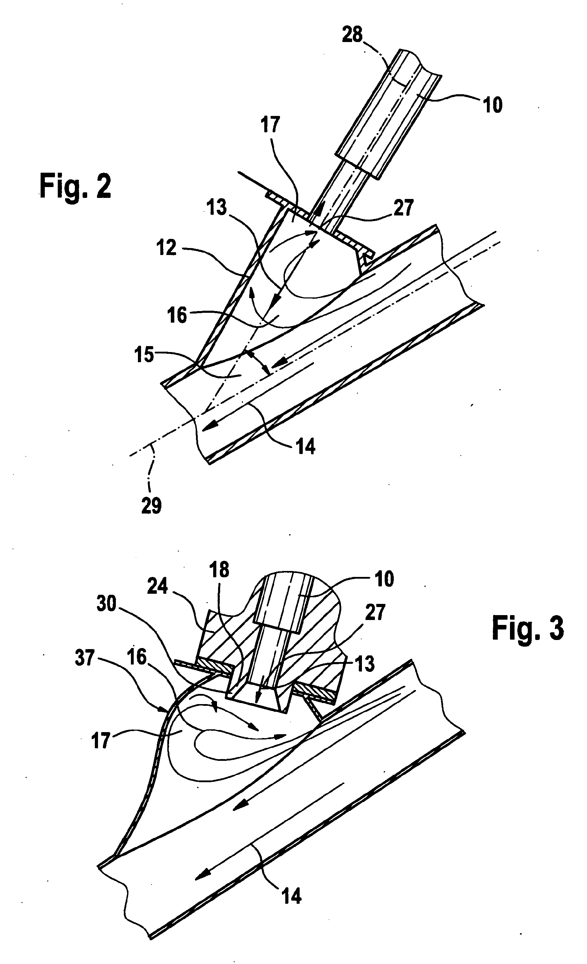

Fig. 1 zeigt in einer schematischen Schnittdarstellung eine bevorzugte Ausführungsform einer erfindungsgemäßen Abgasnachbehandlungsvorrichtung zum Nachbehandeln von Abgasen in einem Abgassystem eines Verbrennungsmotors, in dem ein nicht gezeigter Katalysator zur Reduktion von NOx-Bestandteilen des Abgases des Verbrennungsmotors angeordnet ist. In den Fig. 2, 4, 5 und 6 werden jeweils Detailansichten von Fig. 1 gezeigt. Fig. 3 zeigt eine alternative Ausführungsform eines Flansches 12. Gleiche Elemente sind in den Figuren jeweils gleich bezeichnet.

Das Reduktionsmittel wird entlang einer Einströmrichtung 13 über eine Ventilspitze 27 eines Dosierventils 10 in ein Abgasrohr 11 eingebracht. In dem Abgasrohr 11 strömt ein heißer Abgasstrom entlang einer Abgasströmungsrichtung 14. Das Abgasrohr 11 ist so ausgebildet, dass ein direkter Hitzeeintrag in das Dosierventil 10 vermindert wird und/oder eine erhöhte Wärmeabfuhr aus dem Dosierventil 10 zu ermöglichen.

Das Abgasrohr 11 weist einen Flansch 12 auf, an dem das Dosierventil 10 angeflanscht ist, wie auch aus der Detailansicht in Fig. 2 erkennbar ist. Dadurch ist das Dosierventil 10 mit seiner Ventilspitze 27 von einem äußeren Umfang des Abgasrohrs 11 beabstandet, so dass die Ventilspitze 27 nicht direkt in der Abgasströmung angeordnet ist, sondern etwas zurückgesetzt ist. Somit wird die Ventilspitze 27 nicht unmittelbar der heißen Abgasströmung ausgesetzt, und es wird auf einfache Weise eine passive Kühlmassnahme bereitgestellt. Eine Längsachse 28 des Dosierventils 10 mündet in einem spitzen Winkel 15 in eine Abgasrohrachse 29 (Fig. 2). Insbesondere ist der spitze Winkel 15 zwischen der Einströmungsrichtung 13 des Reduktionsmittels in das Abgasrohr 11 und der Abgasströmungsrichtung 14 im Abgasrohr 11 ausgebildet. Das Dosierventil 10 ist somit zur Abgasrohrachse 29 geneigt, so dass die Eindosierung des Reduktionsmittels in die Abgasströmungsrichtung 14 erfolgt. Auch durch diese Maßnahme ist die Ventilspitze 27 nicht unmittelbar dem heißen Abgasstrom ausgesetzt.

Im ventilnahen Bereich 17 des Abgasrohres 11 tritt eine Rezirkulationsströmung 16 der Abgasströmung auf, die durch den Flansch 12 umgelenkt wird und bei üblicher Ausgestaltung des Flansches 12 (Fig. 2) im Wesentlichen gegen die Einströmrichtung 13 strömt und die Ventilspitze 27 umströmt.

Um eine dadurch entstehende starke Erwärmung der Ventilspitze 27 zu vermeiden, kann der Flansch 12 so ausgebildet sein, dass die Rezirkulationsströmung 16 von der Ventilspitze 27 weg umlenkbar ist. Wie aus der Detailansicht in Fig. 3 erkennbar ist, ist der Flansch 12 im ventilnahen Bereich 17 bauchig ausgebildet und weist eine Wölbung 37 nach außen auf. Dadurch wird die Rezirkulationsströmung 16 von der Ventilspitze 27 abgelenkt. Alternativ oder zusätzlich zu diesem passiven Kühlmittel kann ein Abschirmelement 18 zum Schutz des Dosierventils 10 und insbesondere der Ventilspitze 27 vor der Rezirkulationsströmung 16 ausgebildet sein. Das Abschirmelement 18 ist in Fig. 3 als Teilelement eines Haltekörpers 24 ausgebildet, in dem das Dosierventil 10 geführt und befestigt ist. Das Abschirmelement 18 ragt insbesondere entlang der Einströmrichtung 13 in den ventilnahen Bereich 17 ein, in dem die Rezirkulationsströmung 16 auftritt. Das Abschirmelement 18 ist dabei kragenförmig ausgebildet und schirmt die Ventilspitze 27 vor der Rezirkulationsströmung 16 ab. Im Querschnitt ist das Abschirmelement 18 spitz ausgebildet, wobei die Spitze 30 in den ventilnahen Bereich 17 hineinragt.

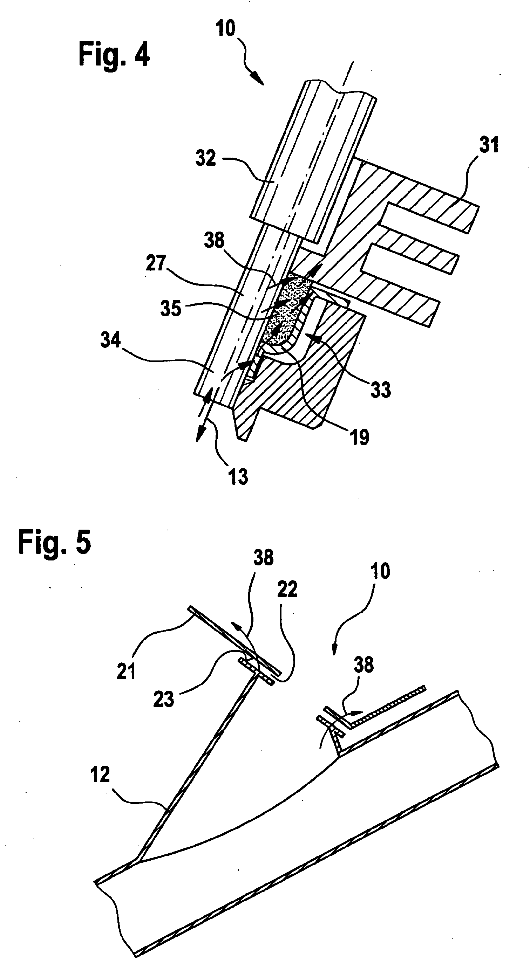

Teilweise ist nicht zu verhindern, dass ein Wärmeeintrag des Rezirkulationsströmung 16 oder des Abgasstroms in die Ventilspitze 27 erfolgt, wobei ein Wärmestrom aufgrund der Wärmedifferenz entgegen die Einströmrichtung 13 durch das Dosierventil 10 zu einem nicht gezeigten Ventilstecker wandert. In der Detailansicht in Fig. 4 ist ein weiteres passives Kühlmittel gezeigt, das dem Dosierventil 10 den Wärmeeintrag entzieht und an einen Kühlkörper 31 abgibt. In einem Bereich zwischen dem Ventilkörper 32 und der Ventilspitze 27 ist das Dosierventil 10 von einem Mantel 19 aus einem Material mit hoher Wärmeleitfähigkeit, beispielsweise einem Wärmeleitblech, umhüllt. Der Mantel 19 liegt am Ventilhals 20 besonders eng an, um eine optimale Wärmeabfuhr an den Kühlkörper 31 zu gewährleisten, und erweitert sich in Richtung gegen die Einströmrichtung 13 trichterförmig. In dem trichterförmigen Bereich zwischen dem Ventilkörper 32 und aus dem Wärmeleitblech gebildeten Mantel 19 ist eine Manschette 35 aus einem Material mit hoher Wärmeleitfähigkeit ausgebildet. Diese fördert in Wirkverbindung mit dem Mantel 19 eine Wärmeabfuhr aus dem Dosierventil 10 in den Kühlkörper 31. Ist der Mantel 19 aus Stahl gebildet, wird ein Stahltopf 33 ausgebildet.

In Fig. 5 ist eine weiteres passives Mittel zur Kühlung des Flansches 12 in einem Kontaktbereich 22 zwischen dem Flansch 12 und dem Dosierventil 10 gezeigt. Insbesondere ist das passive Mittel aus einer flächigen Auflage 23 des Flansches gebildet, die zur Ablage eines Elements aus wärmeableitendem Material, insbesondere eines Wärmeableitblechs 21, dient. Das Wärmeableitblech 21 weist aufgrund der flächigen Ausbildung eine große Oberfläche auf, wodurch eine verstärkte Wärmeabfuhr an die Umgebung gefördert wird. Die abgeführte Wärmeströmung ist mit Pfeilen 38 gekennzeichnet. Durch diese Maßnahme wird der Flansch 12 an der Schnittstelle zum Dosierventil 10 gekühlt, so dass der flanschseitige Wärmeeintrag in das Dosierventil 10 von vorneherein reduziert bzw. minimiert wird.

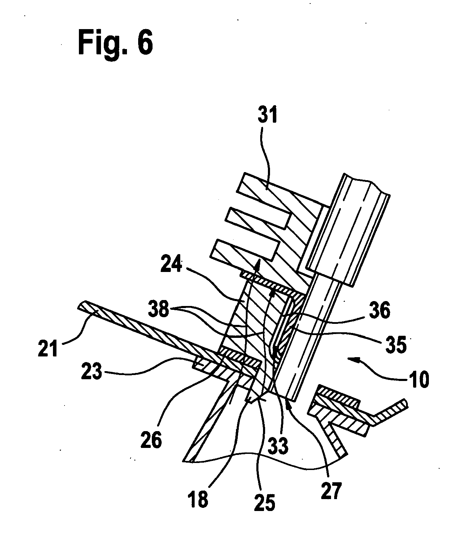

In der Detailansicht gemäß Fig. 6 ist ein passives Kühlmittel gezeigt, das einen Wärmeeintrag in das Dosierventil 10 reduziert. Das passive Kühlmittel wird durch einen Luftspalt 36 gebildet, der zwischen dem aus Keramik gebildeten Haltekörper 24 und dem Stahltopf 33 ausgebildet ist. Der Luftspalt 36 entsteht dadurch, dass das Dosierventil 10 mit seiner Manschette 35 wenigstens bereichsweise beabstandet vom Haltekörper 24 angeordnet ist.

Als zusätzliche Maßnahme ist auf einer Anströmseite 25 des Haltekörpers 24 ein Element 26 aus einem Material mit geringer Wärmeleitfähigkeit angeordnet. Insbesondere ist das Element 26 in Form einer Scheibe mit sehr kleiner Auflagefläche ausgebildet, was zu einem reduzierten Wärmeübergang führt. Somit kann keine Wärme oder nur eine geringe Restwärme vom Haltekörper 24 in die Ventilspitze 27 fließen. Die Wärmeströme vereinigen sich erst im Kühlkörper 31, wodurch sie so abkühlt werden, dass sie das Dosierventil 10 nicht mehr beschädigen können.

## Patentansprüche

1. Abgasnachbehandlungsvorrichtung zum Nachbehandeln von Abgasen in einem Abgassystem eines Verbrennungsmotors, in dem ein Katalysator zur Reduktion von NOx-Bestandteilen des Abgases des Verbrennungsmotors angeordnet ist, sowie mit einer Vorrichtung zum Einbringen eines Reduktionsmittels über ein Abgasrohr (11) in den Katalysator, wobei die Vorrichtung ein Dosierventil (10) umfasst, wobei das Abgasrohr (11) ausgebildet ist, um einen direkten Hitzeeintrag in das Dosierventil (10) zu vermindern und/oder eine erhöhte Wärmeabfuhr aus dem Dosierventil (10) zu ermöglichen, wobei das Abgasrohr (11) einen Flansch (12) aufweist, an dem das Dosierventil (10) angeflanscht ist, wobei zur Halterung des Dosierventils (10) ein Haltekörper (24) vorgesehen ist, **dadurch gekennzeichnet, dass** im montierten Zustand der Flansch (12) in einem Kontaktbereich (22) zu dem Haltekörper (24) des Dosierventils (10) eine Auflage (23) ausbildet, welche zur flächigen Aufnahme eines wärmeableitenden Elements (21) vorgesehen ist, und dass wenigstens auf einer Anströmseite (25) des Haltekörpers (24) ein Element (26) aus Material mit geringer Wärmeleitfähigkeit angeordnet ist.

2. Abgasnachbehandlungsvorrichtung nach Anspruch 1, **dadurch gekennzeichnet, dass** zwischen einer Einströmungsrichtung (13) des Reduktionsmittels in das Abgasrohr (11) und einer Abgasströmungsrichtung (14) im Abgasrohr (11) ein spitzer Winkel (15) ausgebildet ist.

3. Abgasnachbehandlungsvorrichtung nach Anspruch 1 oder 2, **dadurch gekennzeichnet, dass** der Flansch (12) so ausgebildet ist, dass eine im ventilnahen Bereich (17) des Abgasrohres (11) auftretende Rezirkulationsströmung (16) der Abgasströmung umlenkbar ist.

4. Abgasnachbehandlungsvorrichtung nach einem der Ansprüche 1 bis 3, **dadurch gekennzeichnet, dass** der Flansch (12) im ventilnahen Bereich (17) bauchig ausgebildet ist.

5. Abgasnachbehandlungsvorrichtung nach einem der vorhergehenden Ansprüche, **dadurch gekennzeichnet, dass** ein Abschirmelement (18) zum Schutz des Dosierventils (10) vor der Rezirkulationsströmung (16) ausgebildet ist.

6. Abgasnachbehandlungsvorrichtung nach einem der vorhergehenden Ansprüche, **dadurch gekennzeichnet, dass** das Dosierventil (10) zumindest bereichsweise von einem Mantel (19) aus einem Material mit hoher Wärmeleitfähigkeit umhüllt ist.

7. Abgasnachbehandlungsvorrichtung nach einem der vorhergehenden Ansprüche, **dadurch gekennzeichnet, dass** das Dosierventil (10) mit seinem Mantel wenigstens bereichsweise beabstandet vom Haltekörper (24) angeordnet ist.

## Claims

1. Exhaust-gas aftertreatment device for the aftertreatment of exhaust gases in an exhaust system of an internal combustion engine, in which is arranged a catalytic converter for the reduction of NOx constituents of the exhaust gas of the internal combustion engine, having a device for introducing a reducing agent via an exhaust pipe (11) into the catalytic converter, with the device comprising a dosing valve (10), with the exhaust pipe (11) being designed to reduce a direct introduction of heat into the dosing valve (10) and/or to enable an increased dissipation of heat from the dosing valve (10), with the exhaust pipe (11) having a flange (12) on which the dosing valve (10) is flange-mounted, with a holding body (24) being provided for holding the dosing valve (10), **characterized in that,** in the assembled state, the flange (12) forms a support (23) in a region of contact (22) with the dosing valve (10) of the holding body (24), which support (23) is provided for areally holding a heat-dissipating element (21), and **in that** an element (26) composed of a material with low thermal conductivity is arranged at least on an incident-flow side (25) of the holding body (24).

2. Exhaust-gas aftertreatment device according to Claim 1, **characterized in that** an acute angle (15) is formed between an inflow direction (13) of the reducing agent into the exhaust pipe (11) and an exhaust-gas flow direction (14) in the exhaust pipe (11).

3. Exhaust-gas aftertreatment device according to Claim 1 or 2, **characterized in that** the flange (12) is designed such that a recirculation flow (16) of the exhaust-gas flow which occurs **in that** region (17) of the exhaust pipe (11) which is close to the valve can be deflected.

4. Exhaust-gas aftertreatment device according to one of Claims 1 to 3, **characterized in that** the flange (12) is of bulged design in the region (17) close to the valve.

5. Exhaust-gas aftertreatment device according to one of the preceding claims, **characterized in that** a shield element (18) is formed to protect the dosing valve (10) from the recirculation flow (16).

6. Exhaust-gas aftertreatment device according to one of the preceding claims, **characterized in that** the dosing valve (10) is encased, at least in regions, by a jacket (19) composed of a material with high thermal conductivity.

7. Exhaust-gas aftertreatment device according to one of the preceding claims, **characterized in that** the dosing valve (10) is arranged, with its jacket, so as to be spaced apart from the holding body (24) at least in regions.

## Revendications

1. Dispositif de post-traitement de gaz d'échappement pour le post-traitement de gaz d'échappement dans un système de gaz d'échappement d'un moteur à combustion interne, dans lequel est disposé un catalyseur pour la réduction des constituants NOx du gaz d'échappement du moteur à combustion interne, et comprenant aussi un dispositif pour introduire un agent réducteur par le biais d'un tuyau d'échappement (11) dans le catalyseur, le dispositif comprenant une soupape de dosage (10), le tuyau d'échappement (11) étant réalisé de manière à réduire un apport thermique direct dans la soupape de dosage (10) et/ou à permettre une dissipation accrue de la chaleur hors de la soupape de dosage (10), le tuyau d'échappement (11) présentant une bride (12) à laquelle la soupape de dosage (10) est fixée par bridage, un corps de retenue (24) étant prévu pour retenir la soupape de dosage (10), **caractérisé en ce que** dans l'état monté, la bride (12) constitue dans une région de contact (22) avec le corps de retenue (24) de la soupape de dosage (10) un appui (23) qui est prévu pour recevoir à plat un élément dissipateur de chaleur (21), et **en ce qu'**au moins sur un côté d'afflux (25) du corps de retenue (24), on dispose un élément (26) en matériau de faible conductibilité thermique.

2. Dispositif de post-traitement de gaz d'échappement selon la revendication 1, **caractérisé en ce qu'**un angle aigu (15) est formé entre une direction d'afflux (13) de l'agent réducteur dans le tuyau d'échappement (11) et une direction d'écoulement des gaz d'échappement (14) dans le tuyau d'échappement (11).

3. Dispositif de post-traitement de gaz d'échappement selon la revendication 1 ou 2, **caractérisé en ce que** la bride (12) est réalisée de telle sorte qu'un écoulement de recirculation (16) de l'écoulement de gaz d'échappement se produisant dans la région du tuyau d'échappement (11) proche de la soupape (17) peut être dévié.

4. Dispositif de post-traitement de gaz d'échappement selon l'une quelconque des revendications 1 à 3, **caractérisé en ce que** la bride (12) est réalisée sous forme bombée dans la région (17) proche de la soupape.

5. Dispositif de post-traitement de gaz d'échappement selon l'une quelconque des revendications précédentes, **caractérisé en ce qu'**un élément de blindage (18) est réalisé pour protéger la soupape de dosage (10) de l'écoulement de recirculation (16).

6. Dispositif de post-traitement de gaz d'échappement selon l'une quelconque des revendications précédentes, **caractérisé en ce que** la soupape de dosage (10) est enveloppée au moins en partie par une enveloppe (19) en un matériau de haute conductibilité thermique.

7. Dispositif de post-traitement de gaz d'échappement selon l'une quelconque des revendications précédentes, **caractérisé en ce que** la soupape de dosage (10) est disposée avec son enveloppe au moins en partie à distance du corps de retenue (24).
